# EUROPÄISCHE PATENTANMELDUNG

(11) **EP 1 695 784 A1**
(43) Veröffentlichungstag der Anmeldung: **30.08.2006**
(21) Anmeldenummer: 06100269.7
(22) Anmeldetag: 12.01.2006
(51) Int. Cl.: B23K 9/035, B23K 20/12

(54) **Verbindung von zwei Aluminiumprofilen durch eine Reibrührschweissung oder eine Schmelzschweissung**

(30) Priorität: 22.02.2005 DE 102005008062
(71) Anmelder: SIEMENS AKTIENGESELLSCHAFT, 80333 München (DE)
(72) Erfinder: Stiedl, Hans, 47495 Rheinberg (DE)

(57) **Zusammenfassung**

Eine Verbindung von zwei Aluminiumprofilen (1, 2) soll durch entweder eine Reibrührschweißung oder eine Schmelzschweißung (MIG, WIG) geschaffen werden. Innerhalb der beiden Profile (1, 2), die zumindest im Bereich ihrer Schweißstelle identisch ausgebildet sind, ist eine einseitig mit einer mittigen Nut (3a) versehene Einlageschiene (3) angeordnet. Diese Einlageschiene (3) liegt die für die Reibrührschweißung mit ihrer glatten Seite (3b) oder für die Schmelzschweißung mit ihrer die Nut (3a) aufweisenden Seite gegen unterhalb der Schweißstelle befindliche Flächen (1a, 2a) der Profile (1, 2) an.

## Beschreibung

Die Erfindung betrifft eine Verbindung von zwei Aluminiumprofilen durch entweder eine Reibrührschweißung oder eine Schmelzschweißung, wobei die Profile zumindest im Bereich ihrer Schweißstelle identisch ausgebildet sind.

Es ist allgemein bekannt, zwei Aluminiumprofile durch eine Reibrührschweißung (Friction Stir Welding) oder durch eine Schmelzschweißung beispielsweise nach dem MIG- oder WIG-Verfahren zu verbinden.

Der Erfindung liegt die Aufgabe zugrunde, eine Verbindung der gattungsgemäßen Art so zu gestalten, dass die beiden Aluminiumprofile bei gleicher Ausbildung wahlweise durch eine Reibrührschweißung oder durch eine Schmelzschweißung vereinigt werden können, wobei stets die erforderliche Schweißbadstütze vorhanden sein soll.

Diese Aufgabe wird erfindungsgemäß dadurch gelöst, dass innerhalb der beiden Profile eine einseitig mit einer mittigen Nut versehene Einlageschiene angeordnet ist, die für die Reibrührschweißung mit ihrer glatten Seite oder für die Schmelzschweißung mit ihrer die Nut aufweisenden Seite gegen unterhalb der Schweißstelle befindliche Flächen der Profile anliegt.

Um auf einfache Weise einen spielfreien Kontakt zwischen der Einlageschiene und den unterhalb der Schweißstelle befindliche Flächen der Profile zu erreichen, ist nach einer Ausgestaltung der Erfindung vorgesehen, dass die beiden Profile jeweils eine Nase aufweisen, gegen welche die von der Schweißstelle abgewandte Seite der Einlageschiene abgestützt ist.

Durch die Erfindung ist es vorteilhaft möglich, die beiden Aluminiumprofile bei identischer Profilauslegung wahlweise durch eine Reibrührschweißung oder eine Schmelzschweißung zu verbinden. Ohne die erfindungsgemäßen Merkmale können beide Schweißverfahren mit nur einer Profilauslegung nicht realisiert werden.

Im Weiteren wird die Erfindung anhand von zwei Ausführungsbeispielen näher beschrieben, die in der Zeichnung dargestellt sind. Es zeigen
- Fig. 1: zwei Aluminiumprofile, die durch eine Reibrührschweißung zu verbinden sind,
- Fig. 2: die Einzelheit Y aus Fig. 1, im größeren Maßstab,
- Fig. 3: zwei Aluminiumprofile, die durch eine Schmelzschweißung zu verbinden sind,
- Fig. 4: die Einzelheit Z aus Fig. 3, im größeren Maßstab.

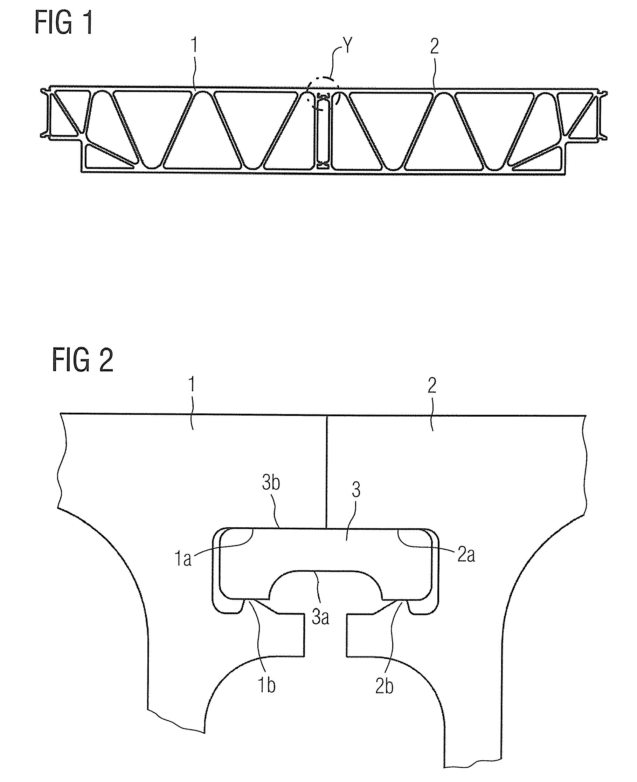

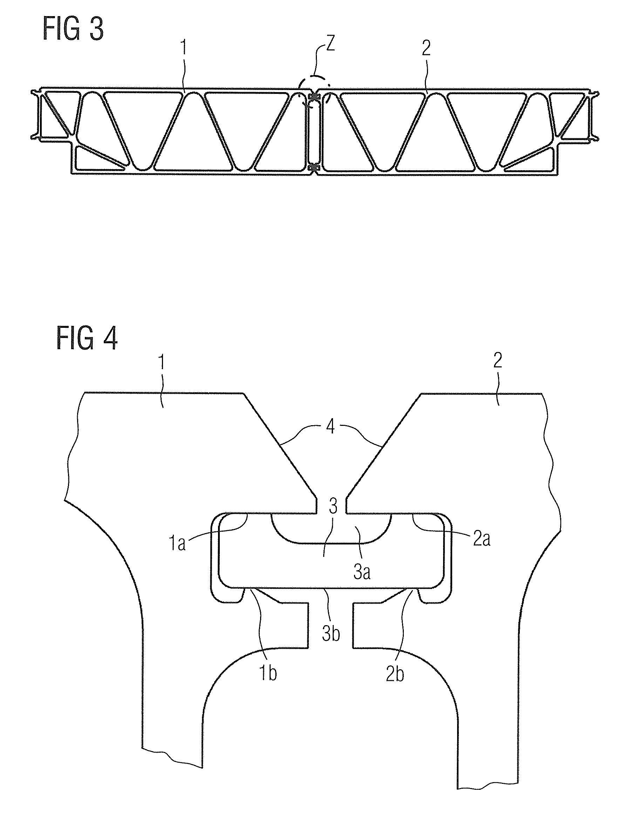

Wie insbesondere aus den Fig. 1 und 3 erkennbar ist, sind die Aluminiumprofile 1 und 2 identisch ausgebildet und von daher kostengünstig mit demselben Profilwerkzeug durch Strangpressen herzustellen. Um die erfindungsgemäßen Vorteile zu erreichen, würde es auch genügen, die Profile 1 und 2 zumindest im Bereich ihrer Schweißstelle gleich auszubilden.

Die Profile 1 und 2 sind so gestaltet, dass sie eine Einlageschiene 3 aufnehmen können, die als Schweißbadstütze dient. Die Einlageschiene 3 ist einseitig mit einer mittigen Nut 3a versehen. Für die Reibrührschweißung (Fig. 2) liegt die Einlageschiene 3 mit ihrer glatten Seite 3b gegen die unterhalb der Schweißstelle befindlichen Flächen 1a und 2a der Profile 1 und 2. Falls als Alternative die Schmelzschweißung (Fig. 4) ausgeführt werden soll, wird durch mechanische Bearbeitung an den Kanten der Profile 1 und 2 eine Schweißfase 4 geschaffen. Nunmehr liegt die Einlageschiene 3 mit ihrer die Nut 3a aufweisenden Seite gegen die unterhalb der Schweißstelle befindlichen Flächen 1a und 2a.

Die beiden Profile 1 und 2 weisen jeweils eine Nase 1b und 2b auf. An diesen Nasen 1b und 2b ist die von der Schweißstelle abgewandte Seite der Einlageschiene 3 abgestützt, um einen bevorzugt spielfreien Kontakt zu den Flächen 1a und 2a der Profile 1 und 2 zu erreichen.

## Patentansprüche

1. Verbindung von zwei Aluminiumprofilen (1, 2) durch entweder eine Reibrührschweißung oder eine Schmelzschweißung, wobei die Profile (1, 2) zumindest im Bereich ihrer Schweißstelle identisch ausgebildet sind,
**dadurch gekennzeichnet, dass**
innerhalb der beiden Profile (1, 2) eine einseitig mit einer mittigen Nut (3a) versehene Einlageschiene (3) angeordnet ist, die für die Reibrührschweißung mit ihrer glatten Seite (3b) oder für die Schmelzschweißung mit ihrer die Nut (3a) aufweisenden Seite gegen unterhalb der Schweißstelle befindliche Flächen (1a, 2a) der Profile (1, 2) anliegt.

2. Verbindung nach Anspruch 1,
**dadurch gekennzeichnet, dass**
die beiden Profile (1, 2) jeweils eine Nase (1b, 2b) aufweisen, gegen welche die von der Schweißstelle abgewandte Seite der Einlageschiene (3) abgestützt ist.
